# FASCICULE DE BREVET EUROPEEN

(11) **EP 3 635 272 B1**
(45) Date de publication et mention de la délivrance du brevet: **26.06.2024**
(21) Numéro de dépôt: 18729735.3
(22) Date de dépôt: 17.05.2018
(51) Int. Cl.: F16D 25/08, F16J 3/04

(54) **VEHICULE AUTOMOBILE EQUIPEE D'UN DISPOSITIF HYDRAULIQUE DE CONTROLE COMPRENANT UNE COMMANDE**
KRAFTFAHRZEUG MIT HYDRAULISCHEM STEUERGERÄT AUSGESTATTET MIT EINER STEUERUNG
MOTOR VEHICLE EQUIPPED WITH A HYDRAULIC CONTROL DEVICE COMPRISING A CONTROL

(30) Priorité: 07.06.2017 FR 1755040
(43) Date de publication de la demande: 15.04.2020
(73) Titulaire: Stellantis Auto SAS, 78300 Poissy (FR)
(72) Inventeur: VOISIN, Jean Philippe, 90350 Evette Salbert (FR); CRETEL, Bruno, 70200 Rignovelle (FR); SIEDEL, Thierry, 90700 Chatenois Les Forges (FR)
(86) Numéro de dépôt international: PCT/FR2018/051190
(87) Numéro de publication internationale: WO 2018/224749

(56) Documents cités:
- EP-A2- 3 128 198
- DE-A1- 3 817 206
- DE-A1- 4 323 686
- FR-A1- 2 257 042
- US-A1- 2003 207 714

## Description

La présente invention concerne une commande pour un véhicule automobile comportant une tige sortant axialement d'un corps, équipée d'un système d'étanchéité, ainsi qu'un dispositif hydraulique de contrôle d'un embrayage et un véhicule automobile comportant une telle commande.

Certaines commandes de véhicules automobiles comportent un vérin comprenant un corps présentant un alésage contenant un piston, qui reçoit une pression de fluide pour pousser axialement une tige de commande sortant de ce corps, dans une direction appelée par convention côté avant.

En particulier le véhicule peut comporter un cylindre émetteur actionné par une pédale de débrayage, envoyant la pression du fluide dans un cylindre récepteur pour déplacer la tige de commande agissant sur une fourchette de débrayage. En variante la commande d'embrayage peut être automatique, actionnée par une motorisation.

Un type de système d'étanchéité connu entre la tige et le corps, présenté notamment par le document GB-B-2163292, comporte un soufflet de protection en élastomère présentant une extrémité fixée autour du corps et l'autre fixée autour de la tige du côté avant, de manière à suivre les déplacements de cette tige en maintenant un volume intérieur fermé.

Un autre type de système d'étanchéité connu, présenté notamment par le document FR-B1-2741401, comporte une membrane déroulante présentant une extrémité fixée autour du corps et l'autre fixée autour de la tige du côté arrière, de manière à s'enrouler en rentrant dans elle même quand la tige coulisse vers l'arrière, et à se dérouler à l'inverse quand la tige sort vers l'avant.

Un autre type de système d'étanchéité connu, présenté notamment par le document EP-B1-2039968, comporte un tube rigide coulissant dans un joint d'étanchéité fixé au corps, qui est raccordé par un élément de jonction souple avec la tige, de manière à suivre le mouvement de cette tige.

Les documents EP-3128198, DE-3817206 et FR-2257042 sont également des exemples de dispositifs de commande hydraulique de l'art antérieur pertinent.

Pour ces différents types de système d'étanchéité on a toujours un volume intérieur fermé qui varie en fonction du déplacement de la tige. De manière connue on dispose des trous d'évent vers ce volume intérieur pour éviter une mise en dépression ou en surpression pendant les mouvements de la tige entraînant des variations de volume, qui pourrait causer des dégradations sur certains composants comme des joints à lèvre, ou des défauts de fonctionnement.

On limite généralement le diamètre des trous d'évent pour éviter le passage d'impuretés trop importantes. Toutefois dans certaines ambiances très poussiéreuses ou humides, notamment chargées en sable, des impuretés de petite dimension peuvent être aspirées par les trous d'évents lors d'une croissance du volume intérieur. On a alors des risques avec une accumulation de ces impuretés, de rayures sur le piston hydraulique, de grippage de ce piston, de fuites au niveau des joints dynamiques d'étanchéité, ou d'oxydation dans le cas d'entrée d'humidité.

En variante il est connu de réaliser des soufflets d'étanchéité pour des commandes de véhicule automobile, présentant un volume restant sensiblement constant. Dans ce cas il faut quand même prévoir des canalisations de micro-fuite pour éviter des surpressions ou des dépressions du volume intérieur, dues notamment aux variations de pression atmosphérique ou de température, afin de permettre des très petits débits d'air. Pour cela on peut réaliser en particulier des petits sillons sur un contour recevant une collerette d'extrémité d'un soufflet d'étanchéité fixée dessus.

Toutefois ce type de canalisation présentant une section très réduite pose des problèmes car il se bouche facilement, en particulier dans des atmosphères grasses ou humides où les poussières s'agglomèrent en colmatant les passages. Dans le cas d'une entrée d'humidité dans le volume intérieur variant très peu, la ventilation de ce volume est insuffisante pour arriver ensuite à le sécher.

La présente invention a notamment pour but d'éviter ces inconvénients de la technique antérieure.
Elle propose à cet effet un véhicule automobile équipé d'un dispositif hydraulique de contrôle comprenant une commande, cette commande comportant une tige de commande sortant d'un corps de cette commande en coulissant axialement, un dispositif étanche fixé d'une part au corps et d'autre part à la tige en fermant un volume intérieur de cette commande, et une canalisation débouchant dans le volume intérieur permettant un passage d'air de ce volume intérieur vers l'extérieur de la commande, cette commande étant remarquable en ce qu'elle comporte une chambre intermédiaire, la canalisation formant un passage supérieur d'air du volume intérieur vers une partie haute de cette chambre intermédiaire, et en ce que la chambre intermédiaire présente un passage inférieur d'air vers l'extérieur, qui est disposé dans une partie basse de cette chambre, le haut et le bas étant définis par rapport au sens de la gravité.

Un avantage de cette commande est que la chambre intermédiaire constitue un sas de tranquillisation pouvant recevoir éventuellement des impuretés comme des poussières ou de l'humidité entrant par le passage inférieur disposé dans la partie basse, qui se déposent alors à l'intérieur de cette chambre en montant difficilement dans sa partie supérieure. On a alors peu de risques d'introduction de ces impuretés dans la canalisation débouchant dans le volume intérieur de la commande.

On protège de manière simple et efficace, avec une chambre de tranquillisation pouvant être réalisée de manière économique par des moulages, le volume intérieur en évitant l'introduction des impuretés.

La commande suivant l'invention peut de plus comporter une ou plusieurs des caractéristiques suivantes, qui peuvent être combinées entre elles.

Avantageusement, la canalisation comporte plusieurs passages disposés en parallèle, présentant chacun une section réduite par rapport à la section du passage inférieur.

Avantageusement, la canalisation est formée par des rainures réalisées sur un contour extérieur de la partie avant du corps.

En particulier, la chambre intermédiaire peut présenter une forme annulaire disposée autour de la tige.

Suivant un mode de réalisation, la chambre intermédiaire est disposée entre une collerette de l'extrémité arrière d'un soufflet réalisé en élastomère formant le dispositif étanche, et une partie circulaire avant du corps.

Dans ce cas, la chambre intermédiaire peut être formée dans une gorge annulaire extérieure de la partie circulaire avant du corps.

Suivant un autre mode de réalisation, la chambre intermédiaire est formée à l'intérieur de la partie avant du corps.

Dans ce cas, la chambre intermédiaire peut présenter une forme axialement allongée, fermée vers l'avant par une collerette arrière du dispositif d'étanchéité.

Suivant un mode de réalisation, le véhicule comprend un embrayage, le dispositif hydraulique contrôlant cet embrayage.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est une vue en coupe axiale d'un cylindre récepteur d'embrayage formant une commande selon l'art antérieur ;
- la figure 2 est une vue partielle en coupe axiale d'un cylindre récepteur d'embrayage formant une commande selon l'invention ;
- les figures 3 et 4 sont des vues en coupe transversale de cette commande, respectivement suivant les plans de coupe III-III et IV-IV ;
- les figures 5 et 6 sont des vues de détail respectivement de la figure 2 et de la figure 4 ;
- les figures 7 et 8 sont des vues respectivement partielle en coupe axiale, et en coupe transversale suivant le plan de coupe VIII-VIII, d'une commande suivant une variante ; et
- la figure 9 est une vue partielle en coupe axiale d'une commande suivant une variante de la commande présentée figure 7.

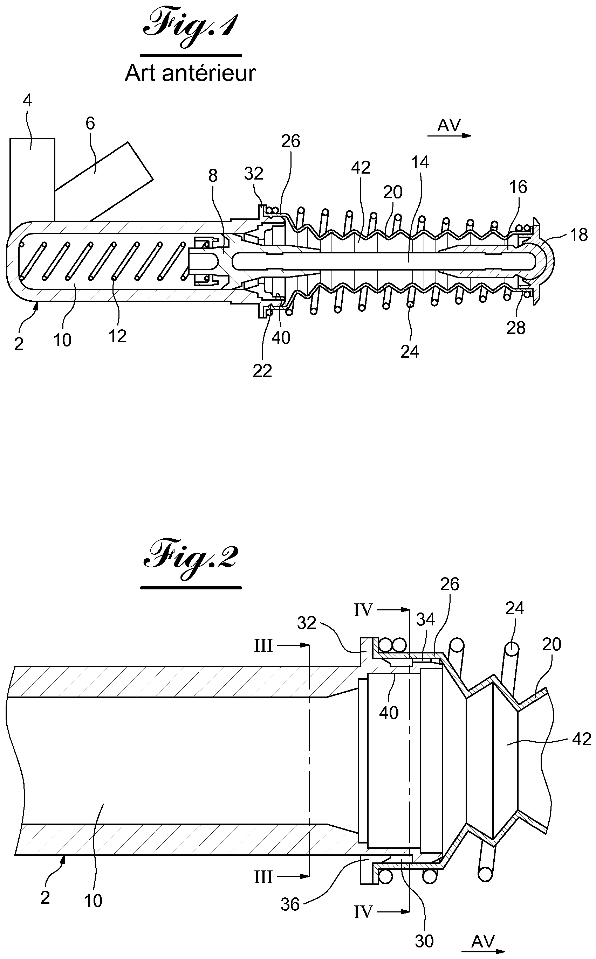

La figure 1 présente un corps 2 d'un cylindre récepteur d'une commande d'embrayage, formé par un moulage d'une matière plastique, comprenant un premier embout 6 prévu pour recevoir une canalisation hydraulique d'alimentation, et un deuxième embout 4 prévu pour recevoir un purgeur.

Le corps 2 présente une chambre hydraulique 10 recevant du côté avant indiqué par la flèche « AV », un piston 8 coulissant dans un alésage axial. Un ressort hélicoïdal de compression 12 pousse en permanence le piston 8 vers l'avant.

Le piston 8 se prolonge vers l'avant par une tige de commande 14, présentant du côté avant un embout 16 dont l'extrémité forme une rotule recevant une coupelle avant 18 prévue pour s'appuyer sur une fourchette de commande d'un embrayage de la transmission du véhicule.

Un soufflet de protection 20 réalisé en élastomère, présente à son extrémité arrière une collerette 26 entourant la partie circulaire avant 40 du corps 2, venant axialement en appui sur la face avant d'un bossage circulaire 32 de ce corps. La collerette arrière 26 présente un bourrelet intérieur continu 22 rentrant dans une rainure de l'extrémité circulaire du corps 2, pour assurer un accrochage et une étanchéité. L'extrémité avant du soufflet de protection 20 présente une collerette avant 28 entourant une partie circulaire de la coupelle avant 18, pour assurer aussi un accrochage et une étanchéité.

Un ressort hélicoïdal extérieur 24 entoure l'ensemble du soufflet 20 en serrant ses collerettes 26, 28, pour protéger ce soufflet et assurer son accrochage. En particulier, le ressort extérieur 24 peut remplacer le ressort de compression intérieur 12 pour pousser le piston 8 vers l'avant.

Une canalisation de passage d'air entre l'extérieur et le volume intérieur du soufflet 42, est formée en réalisant des petits sillons sur les parties circulaires du corps 2 ou de la coupelle avant 18, recevant les collerettes 26, 28 du soufflet 20. Dans les ambiances très poussiéreuses, en particulier en présence d'humidité ou de corps gras, les poussières peuvent s'agglomérer en colmatant les canalisations, et en rendant inopérant ces évents.

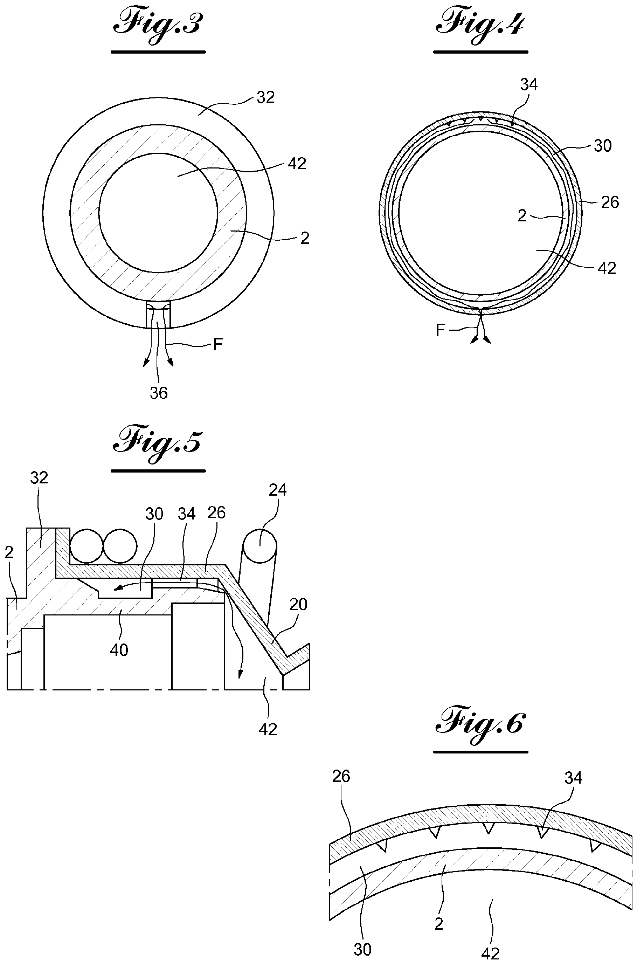

Les figures 2, 3, 4, 5 et 6 présentent l'extrémité avant d'un corps 2 comprenant une partie circulaire 40, présentant à l'extérieur une gorge annulaire recouverte par la collerette arrière 26, formant une chambre intermédiaire de tranquillisation 30. Le piston 8 ainsi que la tige de commande 14 ne sont pas représentés sur ces figures.

Cinq rainures longitudinales supérieures 34 formant des canaux de micro-fuite, présentent chacune une section en forme de « V » réalisée en haut de la partie circulaire avant 40 du corps 2, entre la gorge annulaire de la chambre de tranquillisation 30 et le volume intérieur 42 du soufflet 20. La quantité et la section des rainures supérieures 34 formant une canalisation, sont prévues pour permettre un débit d'air suffisant tout en filtrant les impuretés.

Une rainure longitudinale inférieure 36 formée en bas de la partie circulaire avant 40 du corps 2, en arrière de la gorge annulaire de la chambre de tranquillisation 30, constitue un passage vers l'extérieur présentant une section suffisante pour permettre un débit d'air vers le volume intérieur 42 lors des mouvements de la commande, en passant par cette chambre de tranquillisation.

Lors d'une sortie de la tige de commande 14, le volume intérieur 42 s'accroît en créant un appel d'air entrant par la rainure inférieure 36. La chambre de tranquillisation 30 présente une hauteur, et une section de passage suffisante des deux côtés de son contour circulaire, pour générer une faible vitesse de l'air circulant dedans, et entraîner difficilement jusqu'en haut des impuretés ou des gouttelettes d'eau venant de l'extérieur, notamment par des tourbillons ou par capillarité. On obtient une partie supérieure de la chambre de tranquillisation 30 qui reste propre et sèche.

La section de chaque rainure supérieure 34 réduite par rapport à celle de la rainure inférieure 36, filtre si nécessaire des impuretés arrivant en haut de la chambre de tranquillisation 30.

Lors de la rentrée suivante de la tige de commande 14, le volume intérieur 42 diminue en chassant l'air vers l'extérieur en passant par la chambre de tranquillisation 30. D'éventuelles impuretés déposées dans cette chambre de tranquillisation 30 lors d'une entrée d'air précédente, sont alors facilement chassées par le courant d'air avec l'aide de la gravité, par la rainure inférieure 36 en suivant les flèches F. Dans le cas d'une entrée de gouttelettes d'eau ou d'humidité se condensant, les gouttelettes redescendent facilement en étant aussi chassées vers l'extérieur par la rainure inférieure 36.

En variante la chambre de tranquillisation 30 peut être formée par une gorge circulaire intérieure réalisée dans la collerette arrière 26 du soufflet 20.

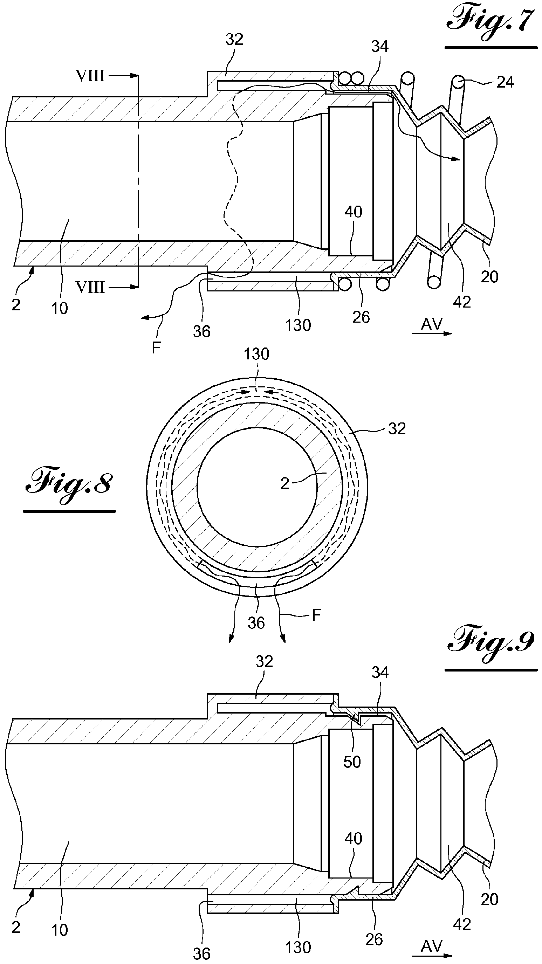

Les figures 7 et 8 présentent le bossage circulaire 32 formé à l'avant du corps 2, s'étendant sur une grande distance axiale, et comportant à l'intérieur la chambre annulaire de tranquillisation 130 de forme axiale qui est ouverte vers l'avant. La chambre de tranquillisation 130 est formée lors du moulage du corps 2 par un noyau circulaire du moule entrant dans cette chambre, qui peut se démouler en coulissant axialement vers l'avant.

Plusieurs rainures longitudinales supérieures 34 formées sur le corps 2 en avant du bossage circulaire 32, constituent en dessous de la collerette arrière 26 du soufflet 20, une canalisation entre la chambre de tranquillisation 130 et le volume intérieur 42. Un perçage longitudinal en arrière de la chambre de tranquillisation 130, forme un passage inférieur 36 vers l'extérieur au travers du bossage circulaire 32.

La figure 9 présente une collerette arrière 26 du soufflet 20 comportant un bossage circulaire intérieur 50 comprenant une face arrière inclinée et une face avant dans un plan transversal, qui est ajusté dans une gorge circulaire de section identique formée autour de la partie circulaire avant du corps 40.

La face arrière inclinée du bossage intérieur 50 permet une insertion de la collerette arrière 26 sur le corps 2 en la poussant vers l'arrière, jusqu'à ce que ce bossage tombe dans sa gorge circulaire où il se trouve clipsé et maintenu par sa face avant transversale qui empêche le retrait.

Comme pour la variante présentée figure 7, des rainures longitudinales supérieures 36 formées sur le haut de la partie circulaire avant du corps 40, suivent le contour de la gorge circulaire pour passer en dessous du bossage intérieur 50 du soufflet 20 disposé dans cette gorge, afin de former une canalisation reliant la chambre de tranquillisation 130 au volume intérieur 42.

De cette manière avec un serrage suffisant de la collerette arrière 26 sur le corps 2, on peut se passer du ressort hélicoïdal extérieur 24 qui dans la variante précédente presse sur cette collerette pour la maintenir en position.

D'une manière générale on peut réaliser des chambres de tranquillisation 30, 130 présentant tout type de forme, comprenant un passage inférieur vers l'extérieur 36 et un passage supérieur 34 vers le volume intérieur 42. Ces formes peuvent être concentriques autour de l'axe du soufflet 20, ou non concentriques en étant disposées sur le côté du soufflet 20. L'étanchéité de la chambre de tranquillisation 30, 130 peut aussi être réalisée par tout type de procédé.

En particulier le soufflet 20 peut être conçu pour présenter un volume intérieur 42 sensiblement constant lors des débattements de la commande, la chambre de tranquillisation 30, 130 servant aux faibles passages d'air nécessaires, notamment pour les variations de pression atmosphérique ou de température.

## Revendications

1. Véhicule automobile équipé d'un dispositif hydraulique de contrôle comprenant une commande comportant une tige de commande (14) sortant d'un corps (2) de cette commande en coulissant axialement, un dispositif étanche (20) fixé d'une part au corps (2) et d'autre part à la tige (14) en fermant un volume intérieur (42) de cette commande, et une canalisation (34) débouchant dans le volume intérieur (42) permettant un passage d'air de ce volume intérieur (42) vers l'extérieur de la commande, **caractérisée en ce qu'**elle comporte une chambre intermédiaire (30, 130), la canalisation (34) formant un passage supérieur d'air du volume intérieur (42) vers une partie haute de cette chambre intermédiaire (30, 130), et **en ce que** la chambre intermédiaire (30, 130) présente un passage inférieur d'air (36) vers l'extérieur, qui est disposé dans une partie basse de cette chambre (30, 130), le haut et le bas étant définis par rapport au sens de la gravité.

2. Véhicule selon la revendication 1, **caractérisée en ce que** la canalisation (34) comporte plusieurs passages disposés en parallèle, présentant chacun une section réduite par rapport à la section du passage inférieur (36).

3. Véhicule selon la revendication 1 ou 2, **caractérisée en ce que** la canalisation (34) est formée par des rainures réalisées sur un contour extérieur de la partie avant (40) du corps (2).

4. Véhicule selon l'une quelconque des revendications précédentes, **caractérisée en ce que** la chambre intermédiaire (30, 130) présente une forme annulaire disposée autour de la tige (14).

5. Véhicule selon la revendication 4, **caractérisée en ce que** la chambre intermédiaire (30) est disposée entre une collerette de l'extrémité arrière (26) d'un soufflet réalisé en élastomère formant le dispositif étanche (20), et une partie circulaire avant (40) du corps (2).

6. Véhicule selon la revendication 5, **caractérisée en ce que** la chambre intermédiaire (30) est formée dans une gorge annulaire extérieure de la partie circulaire avant (40) du corps (2).

7. Véhicule selon l'une quelconque des revendications 1 à 4, **caractérisée en ce que** la chambre intermédiaire (130) est formée à l'intérieur de la partie avant (40) du corps (2).

8. Véhicule selon la revendication 7, **caractérisée en ce que** la chambre intermédiaire (130) présente une forme axialement allongée, fermée vers l'avant par une collerette arrière (26) du dispositif d'étanchéité (20).

9. Véhicule selon l'une quelconque des revendications précédentes, ce véhicule comprenant un embrayage, **caractérisé en ce que** le dispositif hydraulique contrôle l'embrayage.

## Patentansprüche

1. Steuerelement für ein Kraftfahrzeug, bestehend aus einer Steuerstange (14), die durch axiales Gleiten aus einem Gehäuse (2) dieses Steuerelements austritt, und einer wasserdichten Vorrichtung (20), die einerseits am Gehäuse (2) und andererseits daran befestigt ist die Stange (14), indem sie ein Innenvolumen (42) dieser Steuerung verschließt, und ein Rohr (34), das in das Innenvolumen (42) mündet und einen Luftdurchgang von diesem Innenvolumen (42) zur Außenseite der Steuerung ermöglicht, **dadurch gekennzeichnet, dass** es eine Zwischenkammer (30, 130) umfasst, wobei das Rohr (34) einen oberen Luftdurchgang vom Innenvolumen (42) zu einem oberen Teil dieser Zwischenkammer (30, 130) bildet, und dass die Zwischenkammer (30, 130) eine Zwischenkammer (30, 130) aufweist Kammer (30, 130) einen unteren Luftdurchlass (36) nach außen aufweist, der in einem unteren Teil dieser Kammer (30, 130) angeordnet ist, wobei die Oberseite und die Unterseite in Bezug auf die Richtung der Schwerkraft definiert sind.

2. Steuerung nach Anspruch 1, **dadurch gekennzeichnet, dass** das Rohr (34) mehrere parallel angeordnete Durchgänge aufweist, von denen jeder im Vergleich zum Querschnitt des unteren Durchlasses (36) einen verringerten Querschnitt aufweist.

3. Steuerung nach Anspruch 1 oder 2, **dadurch gekennzeichnet, dass** das Rohr (34) durch Nuten gebildet ist, die in eine Außenkontur des vorderen Teils (40) des Körpers (2) eingearbeitet sind.

4. Steuerung nach einem der vorhergehenden Ansprüche, **dadurch gekennzeichnet, dass** die Zwischenkammer (30, 130) ringförmig um die Stange (14) herum angeordnet ist.

5. Steuerung nach Anspruch 4, **dadurch gekennzeichnet, dass** die Zwischenkammer (30) zwischen einem Flansch des hinteren Endes (26) eines die wasserdichte Vorrichtung (20) bildenden Balgs aus Elastomer und einem vorderen kreisförmigen Teil (40) desselben angeordnet ist der Körper (2).

6. Steuerung nach Anspruch 5, **dadurch gekennzeichnet, dass** die Zwischenkammer (30) in einer äußeren Ringnut des vorderen kreisförmigen Teils (40) des Körpers (2) ausgebildet ist.

7. Steuerung nach einem der Ansprüche 1 bis 4, **dadurch gekennzeichnet, dass** die Zwischenkammer (130) im vorderen Teil (40) des Körpers (2) ausgebildet ist.

8. Steuerung nach Anspruch 7, **dadurch gekennzeichnet, dass** die Zwischenkammer (130) eine axial längliche Form aufweist, die nach vorne durch einen hinteren Flansch (26) der Dichtungseinrichtung (20) verschlossen ist.

9. Hydraulische Vorrichtung zur Steuerung einer Kupplung eines Kraftfahrzeugs, **dadurch gekennzeichnet, dass** sie eine Steuerung nach einem der vorhergehenden Ansprüche umfasst.

## Claims

1. Control for a motor vehicle, comprising a control rod (14) emerging from a body (2) of this control by sliding axially, a waterproof device (20) fixed on the one hand to the body (2) and on the other hand to the rod (14) by closing an interior volume (42) of this control, and a pipe (34) opening into the interior volume (42) allowing a passage of air from this interior volume (42) to the outside of the control, **characterized in that** it comprises an intermediate chamber (30, 130), the pipe (34) forming an upper air passage from the interior volume (42) towards an upper part of this intermediate chamber (30, 130) , and **in that** the intermediate chamber (30, 130) has a lower air passage (36) towards the outside, which is arranged in a lower part of this chamber (30, 130), the top and the bottom being defined in relation to the direction of gravity.

2. Control according to claim 1, **characterized in that** the pipe (34) comprises several passages arranged in parallel, each having a reduced section compared to the section of the lower passage (36).

3. Control according to claim 1 or 2, **characterized in that** the pipe (34) is formed by grooves made on an external contour of the front part (40) of the body (2).

4. Control according to any one of the preceding claims, **characterized in that** the intermediate chamber (30, 130) has an annular shape arranged around the rod (14).

5. Control according to claim 4, **characterized in that** the intermediate chamber (30) is arranged between a flange of the rear end (26) of a bellows made of elastomer forming the waterproof device (20), and a front circular part (40) of the body (2).

6. Control according to claim 5, **characterized in that** the intermediate chamber (30) is formed in an outer annular groove of the front circular part (40) of the body (2).

7. Control according to any one of claims 1 to 4, **characterized in that** the intermediate chamber (130) is formed inside the front part (40) of the body (2).

8. Control according to claim 7, **characterized in that** the intermediate chamber (130) has an axially elongated shape, closed towards the front by a rear flange (26) of the sealing device (20).

9. Hydraulic device for controlling a clutch of a motor vehicle, **characterized in that** it comprises a control according to any one of the preceding claims.
